# EUROPEAN PATENT SPECIFICATION

(11) **EP 2 887 744 B1**
(45) Date of publication and mention of the grant of the patent: **08.01.2020**
(21) Application number: 12885201.9
(22) Date of filing: 28.09.2012
(51) Int. Cl.: H04L 29/06, H04W 12/06, H04W 48/14, H04W 84/12

(54) **WIRELESS LOCAL AREA NETWORK ACCESS METHOD AND CORRESPONDING SYSTEM**
WLAN-ZUGANGSVERFAHREN SOWIE ENTSPRECHENDES SYSTEM
PROCÉDÉ D'ACCÈS À UN RÉSEAU LOCAL SANS FIL ET SYSTÈME CORRESPONDANT

(43) Date of publication of application: 24.06.2015
(73) Proprietor: Huawei Technologies Co., Ltd., Longgang District Shenzhen, Guangdong 518129 (CN)
(72) Inventor: LI, Bingzhao, Shenzhen Guangdong 518129 (CN)
(74) Representative: Thun, Clemens
(86) International application number: PCT/CN2012/082351
(87) International publication number: WO 2014/047887

(56) References cited:
- CN-A- 101 765 056
- CN-A- 102 017 781
- CN-A- 102 421 166
- CN-A- 102 625 468
- CN-A- 102 647 771
- CN-A- 102 647 771

## Description

### TECHNICAL FIELD

Embodiments of the present invention relate to the field of communications technologies, and in particular, to a wireless local area network access method, a base station controller, and a user equipment.

### BACKGROUND

With popularity of a wireless local area network (Wireless LAN, WLAN), an operator may construct the WLAN in some places (for example, a shopping mall and an office building) while operating a mobile network. When a user equipment (User Equipment, UE) falls within the coverage of a WLAN, it is capable of accessing the Internet through a WLAN access point (Access Point, AP) to perform operations such as web browsing and downloading. When the user equipment needs to access the Internet by using the WLAN, the user equipment needs to request a password of the WLAN AP from the operator by using an SMS message or in another manner, and needs to enter the password when accessing the AP.

For example, CN 102 647 771 A refers to a wireless local area network discovery and selection method, device, and system, and a terminal. The method includes: sending, when packet switched data is initiated to a cellular network, a registration request to a wireless local area network discovery and selection device; receiving a notification message sent by the wireless local area network discovery and selection device, where the notification message is sent when the wireless local area network discovery and selection device determines that a wireless local area network needs to be used to offload the packet switched data in the cellular network, and the notification message carries access parameter information; and selecting a target wireless access point according to the access parameter information.

Further, CN 102 421 166 A refers to a method, a device, and a system for discovering a wireless access point AP, so as to achieve a purpose of rapidly discovering an available wireless access point and saving electricity of a mobile terminal STA. A base station controller BSC receives a request message sent by a mobile terminal STA, acquires information about one or more APs near the STA from an access controller AC, and sends a notification message to the STA, so that the STA performs an active scan based on a service set identifier SSID to discover a corresponding AP.

### SUMMARY

The present invention provides a wireless local area network access method, a base station controller, and a user equipment, so that when needing to access the Internet through an AP, the user equipment does not need to request a password from an operator and enter the password during access.

In a first aspect a wireless local area network, WLAN, access method is provided, wherein the method is performed by a system comprising a base station controller of a base station serving a user equipment, the user equipment, an access access point, access AP, and a core network, the method comprising:
- sending, by the base station controller, information about a third AP set to the user equipment, wherein the third AP set comprises at least one AP, and the information about the third AP set comprises identifier information of the at least one AP in the third AP set;
- determining, by the user equipment, a second AP set according to the information about the third AP set, wherein the second AP set comprises at least one AP;
- sending, by the user equipment, WLAN access information for requesting WLAN access to the base station controller, wherein the WLAN access information comprises information about the second AP set, and the information about the second AP set comprises identifier information of the at least one AP in the second AP set;
- determining, by the base station controller, a first AP set according to the information about the second AP set, wherein the first AP set comprises at least one AP;
- sending, by the user equipment, a service request to the core network or sending, by the base station controller, an authentication request to the core network, so as to trigger the core network to perform an identity authentication process for the user equipment;
- receiving, by the base station controller, an authentication success message sent by the core network;
- after the reception of the authentication success message by the base station controller, sending, by the base station controller, information about the first AP set to the user equipment, wherein the information about the first AP set comprises identifier information of the at least one AP in the first AP set;
- determining, by the user equipment, from the first AP set the access AP for accessing the WLAN according to the received information about the first AP set;
- when the user equipment accesses the access AP, sending, by the user equipment, an access success message to the base station controller or when the access AP detects that the user equipment accesses it, sending, by the access AP, the access success message to the base station controller, wherein the access success message is used to notify the base station controller that the user equipment successfully accesses the WLAN by using the access AP.

In a first implementation form of the first aspect the information about the first AP set further comprises one or more of the following: a key used for access, a frequency band of the at least one AP in the first AP set, a period of a beacon channel of the at least one AP in the first AP set, transmit signal quality of the at least one AP in the first AP set, and transmit signal strength of the at least one AP in the first AP set.

In a second implementation form of the first aspect the access success message comprises identifier information of the access AP.

In a third implementation form of the first aspect the methd further comprises:
when the access success message sent by the user equipment or the access AP is received, sending, by the base station controller, a channel type indicator to the core network, so that the core network performs charging according to the channel type indicator.

In a fourth implementation form of the first aspect at the time of the receiving WLAN access information for requesting wireless local area network WLAN access sent by the user equipment, further comprising:
Receiving, by the base station controller, a Media Access Control, MAC, address of the user equipment sent by the user equipment.

In a fifth implementation form of the first aspect the base station controller is an evolved NodeB, eNodeB.

In a second aspect a system comprising a base station controller of a base station serving a user equipment, the user equipment, an access access point, access AP, and a core network are provided, wherein the system is configured and intended to perform any of the above methods.

In embodiments of the present invention, when a user equipment needs to access a WLAN by using an AP and then access the Internet, a base station controller may notify the user equipment of an available AP. In this way, the user equipment may directly access the WLAN by using the available AP and does not need to request a password from an operator and enter the password during access.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic flowchart of a wireless local area network access method according to an embodiment of the present invention;
FIG. 2 is a schematic flowchart of a wireless local area network access method according to an embodiment of the present invention;
FIG. 3 is a schematic flowchart of a wireless local area network access method according to an embodiment of the present invention;
FIG. 4 is a schematic block diagram of a base station controller according to an embodiment of the present invention;
FIG. 5 is a schematic block diagram of another base station controller according to an embodiment of the present invention;
FIG. 6 is a schematic block diagram of a user equipment according to an embodiment of the present invention; and
FIG. 7 is a schematic block diagram of another user equipment according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

It should be understood that the technical solutions in the embodiments of the present invention may apply to various communications systems, such as, a Global System of Mobile Communications (Global System of Mobile communications, "GSM" for short) system, a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short) system, a Long Term Evolution (Long Term Evolution, "LTE" for short) system, an LTE frequency division duplex (Frequency Division Duplex, "FDD" for short) system, LTE time division duplex (Time Division Duplex, "TDD" for short) system, and a Universal Mobile Telecommunications System (Universal Mobile Telecommunications System, "UMTS" for short).

A UE may also be referred to as a mobile terminal (Mobile Terminal, MT), a mobile user equipment, or the like, and is capable of communicating with one or more core networks by using a radio access network (Radio Access Network, RAN). The user equipment may be a mobile terminal, for example a mobile phone (or referred to as a "cellular" phone), or a computer having a mobile terminal, for example, a portable, pocket, handheld, computer-embedded, or vehicle-mounted mobile apparatus.

A base station may be a base station (Base Transceiver Station, BTS) in the GSM or CDMA, a base station (NodeB) in the WCDMA, or an eNB or e-NodeB in the LTE, which is not limited in the present invention.

A base station controller may be a BSC (Base Station Controller, base station controller), an RNC (Radio Network Controller, radio network controller), or an eNodeB (evolved NodeB, evolved NodeB), which is not limited in the present invention. The base station controller connects to an AP for information exchange.

An AP described in this document refers to a WLAN AP. The user equipment may connect to the Internet by using the AP. The AP may be an independent AP controlled and managed by an AC (Access Controller, access controller), may also be an AP including an AC function, and may also form a special base station together with a base station, which is not limited in the present invention.

A WLAN may be wireless fidelity (Wireless Fidelity, WiFi) or worldwide interoperability for microwave access (Worldwide interoperability for Microwave Access, WiMAX), which is not limited in the present invention.

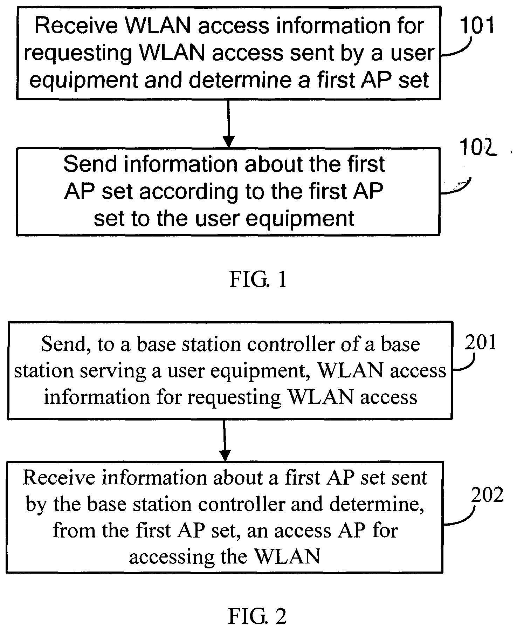

FIG. 1 is a schematic flowchart of a WLAN access method according to an embodiment of the present invention. The method in FIG. 1 is performed by a base station controller of a base station serving a user equipment.

101. Receive WLAN access information for requesting WLAN access sent by the user equipment and determine a first AP set, where the first AP set includes at least one AP.

102. Send information about the first AP set to the user equipment according to the first AP set, so that the user equipment determines, from the at least one AP in the first AP set, an access AP for accessing the WLAN, where the information about the first AP set includes identifier information of the at least one AP in the first AP set.

Optionally, the WLAN access information includes information about an access request and/or a second AP set. When receiving the WLAN access information, the base station controller determines the first AP set according to location information of the user equipment.

Optionally, the WLAN access information includes the information about the second AP set. When receiving the WLAN access information, the base station controller determines the first AP set according to the information about the second AP set in combination with other information (for example, information about load and a congestion degree of backhaul) about at least one AP in the second AP set.

Optionally, the second AP set includes at least one AP, where the at least one AP in the second AP set may be an AP found by the user equipment and/or an AP accessed by the user equipment, and the accessed AP may be an open AP or may be an AP whose key was once saved by the user equipment.

Optionally, the information about the second AP set includes identifier information of the at least one AP in the second AP set, and the information about the second AP set may further include signal quality of the at least one AP in the second AP set and/or signal strength of the at least one AP in the second AP set. The signal quality of the at least one AP in the second AP set and/or the signal strength of the at least one AP in the second AP set are measured by the user equipment according to the information about the second AP set.

Optionally, for the foregoing AP sets and the access AP, identifier information of an AP is a unique identifier corresponding to the AP, for example, a basic service set identifier (Basic Service Set Identifier, BSSID), a service set identifier (Service Set Identifier, SSID), an extended service set identifier (Extended Service Set Identifier, ESSID), and a Media Access Control (Media Access Control, MAC) address.

According to the foregoing method, when a user equipment needs to access a WLAN by using an AP and then access the Internet, a base station controller may notify the user equipment of an available AP. In this way, the user equipment may directly access the WLAN by using the available AP and does not need to request a password from an operator and enter the password during access.

FIG. 2 is a schematic flowchart of a WLAN access method according to an embodiment of the present invention. The method in FIG. 2 is performed by a user equipment.

201. Send, to a base station controller of a base station serving the user equipment, WLAN access information for requesting WLAN access.

202. Receive information about a first AP set sent by the base station controller and determine, from the first AP set, an access AP for accessing the WLAN, where the first AP set is determined by the base station controller according to the WLAN access information, the first AP set includes at least one AP, and the information about the first AP set includes identifier information of the at least one AP in the first AP set.

Optionally, a second AP set includes at least one AP, where the at least one AP in the second AP set may be an AP found by the user equipment and/or an AP accessed by the user equipment, and the accessed AP may be an open AP or may be an AP whose key was once saved by the user equipment.

Optionally, information about the second AP set includes identifier information of the at least one AP in the second AP set, and the information about the second AP set may further include signal quality of the at least one AP in the second AP set and/or signal strength of the at least one AP in the second AP set.

Optionally, for the foregoing AP sets and the access AP, identifier information of an AP is a unique identifier corresponding to the AP, for example, a BSSID, an SSID, an ESSID, and a MAC address.

According to the foregoing method, when a user equipment needs to access a WLAN by using an AP and then access the Internet, a base station controller may notify the user equipment of an available AP. In this way, the user equipment may directly access the WLAN by using the available AP and does not need to request a password from an operator and enter the password during access.

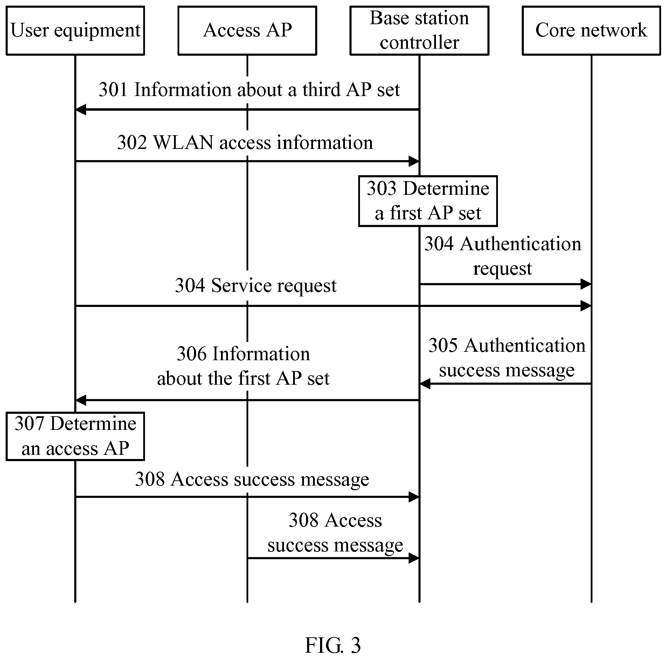

FIG. 3 is a schematic flowchart of a WLAN access method according to an embodiment of the present invention.

301. A user equipment receives information about a third AP set sent by a base station controller, where the third AP set includes at least one AP, the information about the third AP set includes identifier information of the at least one AP in the third AP set, the base station controller is a base station controller of a base station serving the user equipment, and step 301 is an optional step.

Optionally, the information about the third AP set may further include one or more of the following: a frequency band of the at least one AP in the third AP set, a period of a beacon channel of the at least one AP in the third AP set, transmit signal strength of the at least one AP in the third AP set, and transmit signal quality of the at least one AP in the third AP set.

Optionally, the base station controller may determine at least one AP in the serving range of the base station serving the user equipment as an AP in the third AP set and may further determine at least one AP in the serving range of at least one base station adjacent to the base station serving the user equipment as an AP in the third AP set. Alternatively, the base station controller may determine, according to a location of the user equipment, at least one AP whose coverage includes the location of the user equipment as an AP in the third AP set and may further determine at least one AP whose coverage is adjacent to a search scope in which the user equipment is capable of performing AP search as an AP in the third AP set.

302. The user equipment sends, to the base station controller, WLAN access information for requesting WLAN access.

The WLAN access information includes information about a second AP set, where the second AP set includes at least one AP.

When step 301 is performed, any one or more APs in the second AP set may be determined by the user equipment according to the information about the third AP set. Specifically, the user equipment may determine signal quality of the at least one AP in the third AP set, signal strength of the at least one AP in the third AP set, and/or a path loss of the at least one AP in the third AP set according to the received information about the third AP set, and the user equipment may determine one or more APs in the second AP set from the at least one AP in the third AP set according to one or more of the following: the information about the third AP set, the signal quality of the at least one AP in the third AP set, the signal strength of the at least one AP in the third AP set, and the path loss of the at least one AP in the third AP set. For example, the user equipment may determine an AP whose signal quality or signal strength is higher than a specific value as an AP in the second AP set and may further determine an AP whose path loss is smaller than a specific value as an AP in the second AP set. The any one or more APs in the second AP set may further be an AP accessed by the user equipment, or the any one or more APs in the second AP set may be an AP found by the user equipment. When the information about the third AP set includes the frequency band of the at least one AP in the third AP set and/or the period of the beacon channel of the at least one AP in the third AP set, the user equipment may accelerate determining of the second AP set.

Optionally, when step 301 is not performed, the any one or more APs in the second AP set may be an AP found by the user equipment, or the any one or more APs in the second AP set may be an AP accessed by the user equipment.

Optionally, the access request may be borne in a radio resource control (Radio Resource Control, RRC) establishment request message, and the information about the second AP set may be borne in an RRC establishment completion message. The RRC establishment request message is a first message sent by the user equipment to a mobile network, and the RRC establishment request message is used to bear the access request, so as to help the base station controller quickly perform WLAN access control according to the access request. The RRC establishment completion message is a first dedicated message sent by the user equipment to the mobile network, and the RRC establishment completion message is used to bear the information about the second AP set, so as to help the base station controller send information about a first AP set accordingly.

The information about the second AP set includes identifier information of the at least one AP in the second AP set, and the information about the second AP set may further include signal quality of the at least one AP in the second AP set and/or signal strength of the at least one AP in the second AP set.

Optionally, the user equipment may further send a MAC address of the user equipment to the base station controller, so that when the user equipment determines an access AP, the base station controller and the access AP negotiate access identity information of the user equipment. For example, the base station controller sends the MAC address of the user equipment to the access AP, and the access AP determines, according to the MAC address of the user equipment, that the user equipment is an authorized user equipment; and when it is determined that the user equipment is an authorized user equipment and when the user equipment accesses the access AP, the user equipment is allowed to access the Internet.

303. The base station controller determines a first AP set, where the first AP set includes at least one AP.

Optionally, when receiving the WLAN access information, the base station controller determines the first AP set according to location information of the user equipment. Specifically, the base station controller may determine, according to a location of the user equipment, at least one AP whose coverage includes the location of the user equipment as an AP in the first AP set and may further determine at least one AP whose coverage is adjacent to a search scope in which the user equipment is capable of performing AP search as an AP in the first AP set.

The WLAN access information includes the information about the second AP set. When receiving the WLAN access information, the base station controller determines the first AP set from the at least one AP in the second AP set. Specifically, the base station controller determines the first AP set according to the information about the second AP set.304. The user equipment sends a service request to a core network or the base station controller sends an authentication request to the core network, so as to trigger the core network to perform an identity authentication process for the user equipment.

305. The base station controller receives an authentication success message sent by the core network.

Optionally, the authentication success message may be a radio access bearer (Radio Access Bearer, RAB) establishment message, and the authentication success message may further be a verification pass indication. The RAB establishment message is a message that exists in an existing protocol, and therefore if this message is used as the authentication success message, no new message may need to be added, thereby facilitating implementation of this method.

Optionally, step 304 and step 305 may be performed before step 303 or performed at the same time as step 303.

306. When receiving the authentication success message sent by the core network, the base station controller sends the information about the first AP set to the user equipment according to the first AP set.

The information about the first AP set includes identifier information of the at least one AP in the first AP set, and the information about the first AP set may further include one or more of the following: a key used for access, a frequency band of the at least one AP in the first AP set, a period of a beacon channel of the at least one AP in the first AP set, transmit signal quality of the at least one AP in the first AP set, and transmit signal strength of the at least one AP in the first AP set. The key used for access is used to allow the user equipment to, in the case of determining an access AP, access the access AP by using the key corresponding to the access AP. The frequency band of the at least one AP in the first AP set or the period of the beacon channel of the at least one AP in the first AP set may help the user equipment accelerate determining of the access AP.

307. When receiving the information about the first AP set, the user equipment determines, from the at least one AP in the first AP set, an access AP for accessing the WLAN.

Optionally, when the first AP set has only one AP, the user equipment determines the AP as the access AP and uses the access AP to access the WLAN and then access the Internet. When the first AP set includes more than one AP, the user equipment may select, from the first AP set, an AP that has the highest signal quality or signal strength or the smallest path loss value as the access AP, and use the access AP to access the WLAN and then access the Internet. Specifically, the signal quality of the at least one AP in the first AP set and/or the signal strength of the at least one AP in the first AP set may be measured by the user equipment according to the information about the first AP set. When the information about the first AP set includes the transmit signal quality of the at least one AP in the first AP set and/or the transmit signal strength of the at least one AP in the first AP set, the user equipment may determine, according to measured signal quality of an AP in the first AP set and received transmit signal quality corresponding to the AP, a path loss corresponding to the AP, or the user equipment may determine, according to measured signal strength of an AP in the first AP set and received transmit signal strength corresponding to the AP, a path loss corresponding to the AP, so that the user equipment selects an AP with the smallest path loss as the access AP.

308. When the user equipment accesses the access AP, the user equipment sends an access success message to the base station controller; or
when an AP detects that the user equipment accesses it, the AP is the access AP, and the access AP sends an access success message to the base station controller.

Optionally, the success message includes identifier information of the access AP.

Optionally, when an AP and a base station form a specific base station, a base station controller of the specific base station may further send a channel type indicator to the core network, so that the core network performs charging according to the channel type indicator. The channel type may be a WLAN type or a wireless communications network type.

Optionally, for the foregoing AP sets and the access AP, identifier information of an AP is a unique identifier corresponding to the AP, for example, a BSSID, an SSID, an ESSID, and a MAC address.

According to the foregoing method, when a user equipment needs to access a WLAN by using an AP and then access the Internet, a base station controller may notify the user equipment of an available AP. In this way, the user equipment may directly access the WLAN by using the available AP and does not need to request a password from an operator end enter the password during access.

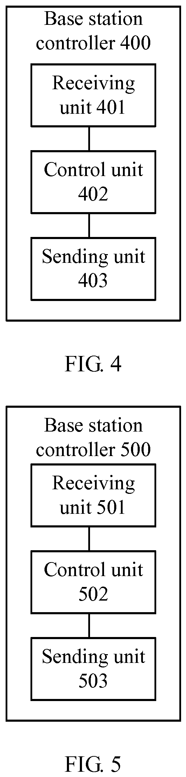

FIG. 4 is a schematic block diagram of a base station controller according to an embodiment of the present invention. The base station controller 400 is a base station controller of a base station serving a user equipment and may perform the steps performed by the base station controller in the foregoing methods. The base station controller 400 includes a receiving unit 401, a control unit 402, and a sending unit 403.

The receiving unit 401 is configured to receive WLAN access information for requesting WLAN access sent by the user equipment.

Optionally, the WLAN access information includes information about an access request and/or a second AP set, where the second AP set includes at least one AP.

Optionally, the second AP set includes at least one AP, where the at least one AP in the second AP set may be an AP found by the user equipment and/or an AP accessed by the user equipment, and the accessed AP may be an open AP or may be an AP whose key was once saved by the user equipment.

Optionally, the information about the second AP set includes identifier information of the at least one AP in the second AP set, and the information about the second AP set may further include signal quality of the at least one AP in the second AP set and/or signal strength of the at least one AP in the second AP set. The signal quality of the at least one AP in the second AP set and/or the signal strength of the at least one AP in the second AP set are measured by the user equipment according to information corresponding to the AP in the second AP set.
The control unit 402 is configured to determine a first AP set, so that the user equipment determines, from the first AP set, an access AP for accessing the WLAN, where the first AP set includes at least one AP.

Optionally, when the receiving unit 401 receives the WLAN access information, the control unit 402 determines the first AP set according to location information of the user equipment.

Optionally, the WLAN access information includes the information about the second AP set. When the receiving unit 401 receives the WLAN access information, the control unit 402 determines the first AP set according to the information about the second AP set in combination with other information (for example, information about load and a congestion degree of backhaul) about the at least one AP in the second AP set.

The sending unit 403 is configured to send information about the first AP set to the user equipment according to the first AP set determined by the control unit 402.

Optionally, the information about the first AP set includes identifier information of the at least one AP in the first AP set, and the information about the first AP set may further include one or more of the following: a key used for access, a frequency band of the at least one AP in the first AP set, a period of a beacon channel of the at least one AP in the first AP set, transmit signal quality of the at least one AP in the first AP set, and transmit signal strength of the at least one AP in the first AP set.

Optionally, for the foregoing AP sets and the access AP, identifier information of an AP is a unique identifier corresponding to the AP, for example, a BSSID, an SSID, an ESSID, and a MAC address.

According to the base station controller 400, when a user equipment needs to access a WLAN by using an AP and then access the Internet, the base station controller 400 may notify the user equipment of an available AP. In this way, the user equipment may directly access the WLAN by using the available AP and does not need to request a password from an operator and enter the password during access.

FIG. 5 is a schematic block diagram of another base station controller according to an embodiment of the present invention. The base station controller 500 is a base station controller of a base station serving a user equipment and may perform the steps performed by the base station controller in the foregoing methods. The base station controller 500 is an embodiment of the base station controller 400. The base station controller 500 includes a receiving unit 501, a control unit 502, and a sending unit 503.

The receiving unit 501 is configured to receive WLAN access information for requesting WLAN access sent by the user equipment.

Optionally, the WLAN access information includes information about an access request and/or a second AP set, where the second AP set includes at least one AP.

Optionally, the second AP set includes at least one AP, where the at least one AP in the second AP set may be an AP found by the user equipment and/or an AP accessed by the user equipment, and the accessed AP may be an open AP or may be an AP whose key was once saved by the user equipment.

Optionally, the information about the second AP set includes identifier information of the at least one AP in the second AP set, and the information about the second AP set may further include signal quality of the at least one AP in the second AP set and/or signal strength of the at least one AP in the second AP set. The signal quality of the at least one AP in the second AP set and/or the signal strength of the at least one AP in the second AP set are measured by the user equipment according to information corresponding to the AP in the second AP set.

The control unit 502 is configured to determine a first AP set, so that the user equipment determines, from the first AP set, an access AP for accessing the WLAN, where the first AP set includes at least one AP.

Optionally, when the receiving unit 501 receives the WLAN access information, the control unit 502 determines the first AP set according to location information of the user equipment.

Optionally, the WLAN access information includes the information about the second AP set. When the receiving unit 501 receives the WLAN access information, the control unit 502 determines the first AP set according to the information about the second AP set in combination with other information (for example, information about load and a congestion degree of backhaul) about the at least one AP in the second AP set.

The sending unit 503 is configured to send information about the first AP set to the user equipment according to the first AP set determined by the control unit 502.

Optionally, the information about the first AP set includes identifier information of the at least one AP in the first AP set, and the information about the first AP set may further include one or more of the following: a key used for access, a frequency band of the at least one AP in the first AP set, a period of a beacon channel of the at least one AP in the first AP set, transmit signal quality of the at least one AP in the first AP set, and transmit signal strength of the at least one AP in the first AP set.

The control unit 502 is further configured to, before the receiving unit 501 receives the WLAN access information sent by the user equipment, determine a third AP set, where the third AP set includes at least one AP.

Optionally, the control unit 502 may determine at least one AP in the serving range of the base station serving the user equipment as an AP in the third AP set and may further determine at least one AP in the serving range of at least one base station adjacent to the base station serving the user equipment as an AP in the third AP set. Alternatively, the control unit 502 may determine, according to a location of the user equipment, at least one AP whose coverage includes the location in which the user equipment is located as an AP in the third AP set and may further determine at least one AP whose coverage is adjacent to a search scope in which the user equipment is capable of performing AP search as an AP in the third AP set.

The sending unit 503 is further configured to send information about the third AP set to the user equipment, so that the user equipment determines the second AP set according to the information about the third AP set. In addition, if the at least one AP in the second AP set is an AP in the third AP set, the user equipment may determine the signal strength of the at least one AP in the second AP set and/or the signal quality of the at least one AP in the second AP set according to the information about the third AP set. The information about the third AP set includes identifier information of the at least one AP in the third AP set.

Optionally, the information about the third AP set may further include one or more of the following: a frequency band of the at least one AP in the third AP set, a period of a beacon channel of the at least one AP in the third AP set, transmit signal strength of the at least one AP in the third AP set, and transmit signal quality of the at least one AP in the third AP set.

The receiving unit 501 is further configured to receive an authentication success message sent by a core network.

The sending unit 503 may be further configured to, after the receiving unit 501 receives the authentication success message, send the information about the first AP set to the user equipment.

The sending unit 503 is further configured to send an authentication request to the core network so as to trigger the core network to initiate an identity authentication process and send an authentication success message to the base station controller 500 after the identity authentication process succeeds.

The receiving unit 501 is further configured to receive an access success message sent by the user equipment or the access AP.

The sending unit 503 is further configured to, when the receiving unit 501 receives the success message, send a channel type indicator to the core network, so that when the base station controller 500 is a base station controller of a specific base station formed by an AP and a base station, the core network performs charging according to the channel type indicator. The channel type may be a WLAN type or a wireless communications network type.

The receiving unit 501 is further configured to receive a MAC address of the user equipment sent by the user equipment.

The control unit 502 is further configured to negotiate with the access AP about access identity information of the user equipment. Specifically, the sending unit 503 sends the MAC address to the access AP, and the access AP determines, according to the MAC address of the user equipment, whether the user equipment is an authorized user equipment; and when the user equipment is an authorized user equipment and when the user equipment accesses the AP, the user equipment is allowed to access the Internet.

Optionally, for the foregoing AP sets and the access AP, identifier information of an AP is a unique identifier corresponding to the AP, for example, a BSSID, an SSID, an ESSID, and a MAC address.

According to the foregoing method, when a user equipment needs to access a WLAN by using an AP and then access the Internet, a base station controller may notify the user equipment of an available AP. In this way, the user equipment may directly access the WLAN by using the available AP and does not need to request a password from an operator and enter the password during access.

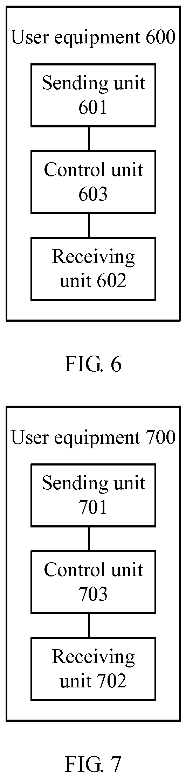

FIG. 6 is a schematic block diagram of a user equipment according to an embodiment of the present invention. The user equipment 600 may perform the steps performed by the user equipment in the foregoing methods. The user equipment 600 includes a sending unit 601, a receiving unit 602, and a control unit 603.

The sending unit 601 is configured to send, to a base station controller of a base station serving the user equipment 600, WLAN access information for requesting WLAN access.

Optionally, the WLAN access information includes information about an access request and/or a second AP set, where the second AP set includes at least one AP, the at least one AP in the second AP set may be an AP found by the user equipment 600 and/or an AP accessed by the user equipment 600, and the accessed AP may be an open AP or may be an AP whose key was once saved by the user equipment 600.

Optionally, the information about the second AP set includes identifier information of the at least one AP in the second AP set, and the information about the second AP set may further include signal quality of the at least one AP in the second AP set and/or signal strength of the at least one AP in the second AP set.

The receiving unit 602 is configured to receive information about a first AP set sent by the base station controller, where the first AP set is determined by the base station controller according to the WLAN access information, and the first AP set includes at least one AP.

The control unit 603 is configured to determine, from the at least one AP in the first AP set, an access AP for accessing the WLAN.

Optionally, for the foregoing AP sets and the access AP, identifier information of an AP is a unique identifier corresponding to the AP, for example, a BSSID, an SSID, an ESSID, and a MAC address.

According to the foregoing method, when a user equipment needs to access a WLAN by using an AP and then access the Internet, a base station controller may notify the user equipment of an available AP. In this way, the user equipment may directly access the WLAN by using the available AP and does not need to request a password from an operator and enter the password during access.

FIG. 7 is a schematic block diagram of another user equipment according to an embodiment of the present invention. The user equipment 700 may perform the steps performed by the user equipment in the foregoing methods. The user equipment 700 is an embodiment of the user equipment 600. The user equipment 700 includes a sending unit 701, a receiving unit 702, and a control unit 703.

The sending unit 701 is configured to send, to a base station controller of a base station serving the user equipment 700, WLAN access information for requesting WLAN access.

Optionally, the WLAN access information includes information about an access request and/or a second AP set, where the second AP set includes at least one AP, the at least one AP in the second AP set may be an AP found by the user equipment 700 and/or an AP accessed by the user equipment 700, and the accessed AP may be an open AP or may be an AP whose key was once saved by the user equipment 700.

Optionally, the information about the second AP set includes identifier information of the at least one AP in the second AP set, and the information about the second AP set may further include signal quality of the at least one AP in the second AP set and/or signal strength of the at least one AP in the second AP set.

The receiving unit 702 is configured to receive information about a first AP set sent by the base station controller, where the first AP set is determined by the base station controller according to the WLAN access information, and the first AP set includes at least one AP.

Optionally, the information about the first AP set includes identifier information of the at least one AP in the first AP set, and the information about the first AP set may further include one or more of the following: a key used for access, a frequency band of the at least one AP in the first AP set, a period of a beacon channel of the at least one AP in the first AP set, transmit signal quality of the at least one AP in the first AP set, and transmit signal strength of the at least one AP in the first AP set.

The control unit 703 is configured to determine, from the at least one AP in the first AP set, an access AP for accessing the WLAN.

The control unit 703 is specifically configured to determine, when the first AP set has only one AP, the AP as the access AP; when the first AP set includes more than one AP, select an AP that has the highest signal quality or signal strength or the smallest path loss value in the first AP set as the access AP, and use the access AP to access the WLAN and then access the Internet. Specifically, the control unit 703 measures signal quality and/or signal strength of the at least one AP in the first AP set according to the information about the first AP set received by the receiving unit 702. The control unit 703 may select an AP with the highest signal quality or signal strength as the access AP. In the case of determining the signal quality and/or the signal strength of the at least one AP in the first AP set, the control unit 703 may further determine a path loss of the at least one AP in the first AP set in combination with the transmit signal strength and/or the transmit signal quality of the at least one AP in the first AP set that is carried in the information about the first AP set, and select an AP with the smallest path loss as the access AP.

The receiving unit 702 is further configured to receive information about a third AP set sent by the base station controller, where the third AP set includes at least one AP. The information about the third AP set includes identifier information of the at least one AP in the third AP set.

Optionally, the information about the third AP set may further include a frequency band of the at least one AP in the third AP set and/or a period of a beacon channel of the at least one AP in the third AP set.

The control unit 703 is further configured to determine the second AP set according to the information about the third AP set. Specifically, the control unit 703 determines signal quality and/or signal strength of the at least one AP in the third AP set according to the information about the third AP set received by the receiving unit 702. The control unit 703 determines one or more APs in the second AP set from the at least one AP in the third AP set according to one or more of the following: the information about the third AP set, the signal strength of the at least one AP in the third AP set, and the signal quality of the at least one AP in the third AP set.

The control unit 703 may further be configured to use a found AP and/or an accessed AP as an AP in the second AP set.

The control unit 703 is further configured to, before the receiving unit 702 receives the information about the first AP set sent by the base station controller, control a process of performing identity authentication with a core network, so that the core network sends an authentication success message to the base station controller after the identity authentication succeeds, and the base station controller sends the information about the first AP set to the user equipment 700 after receiving the authentication success message.

The sending unit 701 is further configured to, before the control unit controls the process of performing identity authentication with the core network, send a service request to the core network so as to trigger the core network to initiate an identity authentication process.

The sending unit 701 is further configured to, after the control unit 703 determines the access AP and accesses the WLAN by using the access AP, send to the base station controller an access success message that is used to notify the base station controller that the user equipment successfully accesses the WLAN by using the access AP.

The sending unit 701 is further configured to send a MAC address of the user equipment to the base station controller, so that the base station controller negotiates with the access AP about access identity information of the user equipment.

Optionally, for the foregoing AP sets and the access AP, identifier information of an AP is a unique identifier corresponding to the AP, for example, a BSSID, an SSID, an ESSID, and a MAC address.

According to the foregoing method, when a user equipment needs to access a WLAN by using an AP and then access the Internet, a base station controller may notify the user equipment of an available AP. In this way, the user equipment may directly access the WLAN by using the available AP and does not need to request a password from an operator and enter the password during access.

Another embodiment of the present invention provides a base station controller. The base station controller is a base station controller of a base station serving a user equipment and may perform the steps performed by the base station controller in the foregoing methods. The base station controller includes a receiver, a processor, and a sender.

The receiver is configured to receive WLAN access information for requesting WLAN access sent by the user equipment.

Optionally, the WLAN access information includes information about an access request and/or a second AP set, where the second AP set includes at least one AP.

Optionally, the second AP set includes at least one AP, where the at least one AP in the second AP set may be an AP found by the user equipment and/or an AP accessed by the user equipment, and the accessed AP may be an open AP or may be an AP whose key was once saved by the user equipment.

Optionally, the information about the second AP set includes identifier information of the at least one AP in the second AP set, and the information about the second AP set may further include signal quality of the at least one AP in the second AP set and/or signal strength of the at least one AP in the second AP set. The signal quality of the at least one AP in the second AP set and/or the signal strength of the at least one AP in the second AP set are measured by the user equipment according to information corresponding to the AP in the second AP set.

The processor is configured to determine a first AP set, so that the user equipment determines, from the first AP set, an access AP for accessing the WLAN, where the first AP set includes at least one AP.

Optionally, when the receiver receives the WLAN access information, the processor determines the first AP set according to location information of the user equipment.

Optionally, the WLAN access information includes the information about the second AP set. When the receiver receives the WLAN access information, the processor determines the first AP set according to the information about the second AP set With reference to other information (for example, information about load and a congestion degree of backhaul) about the at least one AP in the second AP set.

The sender is configured to send information about the first AP set to the user equipment according to the first AP set determined by the processor.

Optionally, the information about the first AP set includes identifier information of the at least one AP in the first AP set, and the information about the first AP set may further include one or more of the following: a key used for access, a frequency band of the at least one AP in the first AP set, a period of a beacon channel of the at least one AP in the first AP set, transmit signal quality of the at least one AP in the first AP set, and transmit signal strength of the at least one AP in the first AP set.

The processor is further configured to, before the receiver receives the WLAN access information sent by the user equipment, determine a third AP set, where the third AP set includes at least one AP.

Optionally, the processor may determine at least one AP in the serving range of the base station serving the user equipment as an AP in the third AP set and may further determine at least one AP in the serving range of at least one base station adjacent to the base station serving the user equipment as an AP in the third AP set. Alternatively, the processor may determine, according to a location of the user equipment, at least one AP whose coverage includes the location in which the user equipment is located as an AP in the third AP set and may further determine at least one AP whose coverage is adjacent to a search scope in which the user equipment is capable of performing AP search as an AP in the third AP set.

The sender is further configured to send information about the third AP set to the user equipment, so that the user equipment determines the second AP set according to the information about the third AP set. In addition, if the at least one AP in the second AP set is an AP in the third AP set, the user equipment may determine the signal strength of the at least one AP in the second AP set and/or the signal quality of the at least one AP in the second AP set according to the information about the third AP set. The information about the third AP set includes identifier information of the at least one AP in the third AP set.

Optionally, the information about the third AP set may further include a frequency band of the at least one AP in the third AP set and/or a period of a beacon channel of the at least one AP in the third AP set.

The receiver is further configured to receive an authentication success message sent by a core network.

The sender is further configured to, after the receiver receives the authentication success message, send the information about the first AP set to the user equipment.

The sender is further configured to send an authentication request to the core network so as to trigger the core network to initiate an identity authentication process and send an authentication success message to the base station controller after the identity authentication process succeeds.

The receiver is further configured to receive an access success message sent by the user equipment or the access AP.

The sender is further configured to, when the receiver receives the success message, send a channel type indicator to the core network, so that when the base station controller is a base station controller of a specific base station formed by an AP and a base station, the core network performs charging according to the channel type indicator. The channel type may be a WLAN type or a wireless communications network type.

The receiver is further configured to receive a MAC address of the user equipment sent by the user equipment.

The processor is further configured to negotiate with the access AP about access identity information of the user equipment. Specifically, the sender sends the MAC address to the access AP, and the access AP determines, according to the MAC address of the user equipment, whether the user equipment is an authorized user equipment; and when the user equipment is an authorized user equipment and when the user equipment accesses the AP, the user equipment is allowed to access the Internet.

Optionally, for the foregoing AP sets and the access AP, identifier information of an AP is a unique identifier corresponding to the AP, for example, a BSSID, an SSID, an ESSID, and a MAC address.

According to the foregoing method, when a user equipment needs to access a WLAN by using an AP and then access the Internet, a base station controller may notify the user equipment of an available AP. In this way, the user equipment may directly access the WLAN by using the available AP and does not need to request a password from an operator and enter the password during access.

Another embodiment of the present invention provides a user equipment. The user equipment may perform the steps performed by the user equipment in the foregoing methods. The user equipment includes a sender, a receiver, and a processor.

The sender is configured to send, to a base station controller of a base station serving the user equipment, WLAN access information for requesting WLAN access.

Optionally, the WLAN access information includes information about an access request and/or a second AP set, where the second AP set includes at least one AP, the at least one AP in the second AP set may be an AP found by the user equipment and/or an AP accessed by the user equipment, and the accessed AP may be an open AP or may be an AP whose key was once saved by the user equipment.

Optionally, the information about the second AP set includes identifier information of the at least one AP in the second AP set, and the information about the second AP set may further include signal quality of the at least one AP in the second AP set and/or signal strength of the at least one AP in the second AP set.

The receiver is configured to receive information about a first AP set sent by the base station controller, where the first AP set is determined by the base station controller according to the WLAN access information, and the first AP set includes at least one AP.

Optionally, the information about the first AP set includes identifier information of the at least one AP in the first AP set, and the information about the first AP set may further include one or more of the following: a key used for access, a frequency band of the at least one AP in the first AP set, a period of a beacon channel of the at least one AP in the first AP set, transmit signal quality of the at least one AP in the first AP set, and transmit signal strength of the at least one AP in the first AP set.

The processor is configured to determine, from the at least one AP in the first AP set, an access AP for accessing the WLAN.

The processor is specifically configured to determine, when the first AP set has only one AP, the AP as the access AP; when the first AP set includes more than one AP, select an AP that has the highest signal quality or signal strength or the smallest path loss value in the first AP set as the access AP, and use the access AP to access the WLAN and then access the Internet. Specifically, the processor measures signal quality and/or signal strength of the at least one AP in the first AP set according to the information about the first AP set received by the receiver. The processor may select an AP with the highest signal quality or signal strength as the access AP. In the case of determining the signal quality and/or the signal strength of the at least one AP in the first AP set, the processor may further determine a path loss of the at least one AP in the first AP set With reference to the transmit signal strength and/or the transmit signal quality of the at least one AP in the first AP set that is carried in the information about the first AP set, and select an AP with the smallest path loss as the access AP.

The receiver is further configured to receive information about a third AP set sent by the base station controller, where the third AP set includes at least one AP. The information about the third AP set includes identifier information of the at least one AP in the third AP set.

Optionally, the information about the third AP set may further include a frequency band of the at least one AP in the third AP set and/or a period of a beacon channel of the at least one AP in the third AP set.

The processor is further configured to determine the second AP set according to the information about the third AP set. Specifically, the processor determines signal quality and/or signal strength of the at least one AP in the third AP set according to the information about the third AP set received by the receiver. The processor determines one or more APs in the second AP set from the at least one AP in the third AP set according to one or more of the following: the information about the third AP set, the signal strength of the at least one AP in the third AP set, and the signal quality of the at least one AP in the third AP set.

The processor may further be configured to use a found AP and/or an accessed AP as an AP in the second AP set.

The processor is further configured to, before the receiver receives the information about the first AP set sent by the base station controller, control a process of performing identity authentication with a core network, so that the core network sends an authentication success message to the base station controller after the identity authentication succeeds, and the base station controller sends the information about the first AP set to the user equipment after receiving the authentication success message.

The sender is further configured to, before the processor controls the process of performing identity authentication with the core network, send a service request to the core network so as to trigger the core network to initiate an identity authentication process.

The sender is further configured to, after the processor determines the access AP and accesses the WLAN by using the access AP, send the base station controller an access success message that is used to notify the base station controller that the user equipment successfully accesses the WLAN by using the access AP.

The sender is further configured to send a MAC address of the user equipment to the base station controller, so that the base station controller negotiates with the access AP about access identity information of the user equipment.

Optionally, for the foregoing AP sets and the access AP, identifier information of an AP is a unique identifier corresponding to the AP, for example, a BSSID, an SSID, an ESSID, and a MAC address.

According to the foregoing method, when a user equipment needs to access a WLAN by using an AP and then access the Internet, a base station controller may notify the user equipment of an available AP. In this way, the user equipment may directly access the WLAN by using the available AP and does not need to request a password from an operator and enter the password during access.

A person of ordinary skill in the art may be aware that, in combination with the examples described in the embodiments disclosed in this specification, units and steps of the methods may be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, a detailed working process of the foregoing system, apparatus, and unit may refer to the corresponding process in the foregoing method embodiments, and the details will not be described herein again.

In the several embodiments provided in the present invention, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium, and includes several instructions for instructing a computer device (which may be a personal computer, a server, or a network device) or a processor (processor) to perform all or a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific embodiments of the present invention, but are not intended to limit the protection scope of the present invention as defined in the appended claims.

## Claims

1. A wireless local area network, WLAN, access method, wherein the method is performed by a system comprising a base station controller of a base station serving a user equipment, the user equipment, an access access point, access AP, and a core network, the method comprising:
a.) sending, by the base station controller, information about a third AP set to the user equipment, wherein the third AP set comprises at least one AP, and the information about the third AP set comprises identifier information of the at least one AP in the third AP set (step 301);
b.) determining, by the user equipment, a second AP set according to the information about the third AP set, wherein the second AP set comprises at least one AP;
c.) sending, by the user equipment, WLAN access information for requesting WLAN access to the base station controller, wherein the WLAN access information comprises information about the second AP set, and the information about the second AP set comprises identifier information of the at least one AP in the second AP set (step 302);
d.) determining, by the base station controller, a first AP set according to the information about the second AP set, wherein the first AP set comprises at least one AP (step 303);
e.) sending, by the user equipment, a service request to the core network or sending, by the base station controller, an authentication request to the core network, so as to trigger the core network to perform an identity authentication process for the user equipment (step 304);
f.) receiving, by the base station controller, an authentication success message sent by the core network (step 305);
g.) after the reception of the authentication success message by the base station controller, sending, by the base station controller, information about the first AP set to the user equipment, wherein the information about the first AP set comprises identifier information of the at least one AP in the first AP set (step 306);
h.) determining, by the user equipment, from the first AP set the access AP for accessing the WLAN according to the received information about the first AP set (step 307);
i.) when the user equipment accesses the access AP, sending, by the user equipment, an access success message to the base station controller or when the access AP detects that the user equipment accesses it, sending, by the access AP, the access success message to the base station controller, wherein the access success message is used to notify the base station controller that the user equipment successfully accesses the WLAN by using the access AP (step 308).

2. The method according to claim 1, wherein information about the first AP set further comprises one or more of the following: a key used for access, a frequency band of the at least one AP in the first AP set, a period of a beacon channel of the at least one AP in the first AP set, transmit signal quality of the at least one AP in the first AP set, and transmit signal strength of the at least one AP in the first AP set.

3. The method according to claim 1 or 2, wherein the access success message comprises identifier information of the access AP.

4. The method according to any one of claims 1 to 3, further comprising:
when the access success message sent by the user equipment or the access AP is received, sending, by the base station controller, a channel type indicator to the core network, so that the core network performs charging according to the channel type indicator.

5. The method according to any one of claims 1 to 4, at the time of the receiving (101) WLAN access information for requesting wireless local area network WLAN access sent by the user equipment, further comprising:
receiving, by the base station controller, a Media Access Control, MAC, address of the user equipment sent by the user equipment.

6. The method according to any of claims 1 to 5,
wherein the base station controller is an evolved NodeB, eNodeB.

7. A system comprising a base station controller of a base station serving a user equipment, the user equipment, an access access point, access AP, and a core network, wherein the system is configured and intended to perform any of the methods according to claims 1 - 6.

## Patentansprüche

1. Verfahren für einen Zugriff auf ein drahtloses lokales Netzwerk, WLAN (Wireless Local Area Network), wobei das Verfahren durch ein System umfassend eine Basisstationssteuerung einer eine Benutzereinrichtung bedienenden Basisstation, die Benutzereinrichtung, einen Zugriffspunkt für einen Zugriff, Zugriffs-AP (Access Point), und ein Kernnetzwerk durchgeführt wird, wobei das Verfahren umfasst:
a.) Senden, durch die Basisstationssteuerung, einer Information über einen dritten AP-Satz an die Benutzereinrichtung, wobei der dritte AP-Satz mindestens einen AP umfasst, und die Information über den dritten AP-Satz eine Kennungsinformation des mindestens einen AP in dem dritten AP-Satz umfasst (Schritt 301);
b.) Bestimmen, durch die Benutzereinrichtung, eines zweiten AP-Satzes gemäß der Information über den dritten AP-Satz, wobei der zweite AP-Satz mindestens einen AP umfasst;
c.) Senden, durch die Benutzereinrichtung, einer WLAN-Zugriffsinformation zum Anfordern eines WLAN-Zugriffs an die Basisstationssteuerung, wobei die WLAN-Zugriffsinformation eine Information über den zweiten AP-Satz umfasst, und die Information über den zweiten AP-Satz eine Kennungsinformation des mindestens einen AP in dem zweiten AP-Satz umfasst (Schritt 302);
d.) Bestimmen, durch die Basisstationssteuerung, eines ersten AP-Satzes gemäß der Information über den zweiten AP-Satz, wobei der erste AP-Satz mindestens einen AP umfasst (Schritt 303);
e.) Senden, durch die Benutzereinrichtung, einer Dienstanforderung an das Kernnetzwerk oder Senden, durch die Basisstationssteuerung, einer Authentifizierungsanforderung an das Kernnetzwerk, um das Kernnetzwerk zu veranlassen, einen Identitätsauthentifizierungsvorgang für die Benutzereinrichtung durchzuführen (Schritt 304);
f.) Empfangen, durch die Basisstationssteuerung, einer durch das Kernnetzwerk gesendeten Authentifizierungserfolgsnachricht (Schritt 305);
g.) nach dem Empfang der Authentifizierungserfolgsnachricht durch die Basisstationssteuerung, Senden, durch die Basisstationssteuerung, einer Information über den ersten AP-Satz an die Benutzereinrichtung, wobei die Information über den ersten AP-Satz eine Kennungsinformation des mindestens einen AP in dem ersten AP-Satz umfasst (Schritt 306);
h.) Bestimmen, durch die Benutzereinrichtung, von dem ersten AP-Satz des Zugriffs-AP zum Zugreifen auf das WLAN gemäß der empfangenen Information über den ersten AP-Satz (Schritt 307);
i.) wenn die Benutzereinrichtung auf den Zugriffs-AP zugreift, Senden, durch die Benutzereinrichtung, einer Zugriffserfolgsnachricht an die Basisstationssteuerung oder, wenn der Zugriffs-AP erkennt, dass die Benutzereinrichtung darauf zugreift, Senden, durch den Zugriffs-AP, der Zugriffserfolgsnachricht an die Basisstationssteuerung, wobei die Zugriffserfolgsnachricht verwendet wird, um die Basisstationssteuerung zu benachrichtigen, dass die Benutzereinrichtung erfolgreich auf das WLAN unter Verwendung des Zugriffs-AP zugreift (Schritt 308).

2. Verfahren nach Anspruch 1, wobei die Information über den ersten AP-Satz ferner eines oder mehreres von Folgendem umfasst: einen für einen Zugriff verwendeten Schlüssel, ein Frequenzband des mindestens einen AP in dem ersten AP-Satz, eine Periode eines Beaconkanals des mindestens einen AP in dem ersten AP-Satz, eine Übertragungssignalqualität des mindestens einen AP in dem ersten AP-Satz und eine Übertragungssignalstärke des mindestens einen AP in dem ersten AP-Satz.

3. Verfahren nach Anspruch 1 oder 2, wobei die Zugriffserfolgsnachricht eine Kennungsinformation des Zugriffs-AP umfasst.

4. Verfahren nach einem der Ansprüche 1 bis 3, ferner umfassend:
wenn die durch die Benutzereinrichtung oder den Zugriffs-AP gesendete Zugriffserfolgsnachricht empfangen wird, Senden, durch die Basisstationssteuerung, einer Kanaltypkennung an das Kernnetzwerk, damit das Kernnetzwerk eine Gebührenerhebung gemäß der Kanaltypkennung durchführt.

5. Verfahren nach einem der Ansprüche 1 bis 4, wobei, zu dem Zeitpunkt des Empfangens (101) der durch die Benutzereinrichtung gesendeten WLAN-Zugriffsinformation zum Anfordern eines Zugriffs auf ein drahtloses lokales Netzwerk (WLAN), das Verfahren ferner umfasst:
Empfangen, durch die Basisstationssteuerung, einer durch die Benutzereinrichtung gesendeten Adresse einer Medienzugriffssteuerung, MAC (Media Access Control), der Benutzereinrichtung.

6. Verfahren nach einem der Ansprüche 1 bis 5,
wobei die Basisstationssteuerung ein "evolved NodeB", eNodeB, ist.

7. System, umfassend eine Basisstationssteuerung einer eine Benutzereinrichtung bedienenden Basisstation, die Benutzereinrichtung, einen Zugriffspunkt für einen Zugriff, Zugriffs-AP (Access Point), und ein Kernnetzwerk, wobei das System ausgestaltet und vorgesehen ist, ein Verfahren nach einem der Ansprüche 1 - 6 durchzuführen.

## Revendications

1. Procédé d'accès à un réseau local sans fil, WLAN, dans lequel le procédé est réalisé par un système comprenant un contrôleur de station de base d'une station de base servant un équipement utilisateur, l'équipement utilisateur, un point d'accès à accès, AP à accès, et un réseau fédérateur, le procédé comprenant :
a.) l'envoi, par le contrôleur de station de base, d'informations concernant un troisième ensemble d'AP à l'équipement utilisateur, dans lequel le troisième ensemble d'AP comprend au moins un AP, et les informations concernant le troisième ensemble d'AP comprennent des informations d'identifiant de l'au moins un AP dans le troisième ensemble d'AP (étape 301) ;
b.) la détermination, par l'équipement utilisateur, d'un deuxième ensemble d'AP selon les informations concernant le troisième ensemble d'AP, dans lequel le deuxième ensemble d'AP comprend au moins un AP ;
c.) l'envoi, par l'équipement utilisateur, d'informations d'accès au WLAN pour demander un accès au WLAN au contrôleur de station de base, dans lequel les informations d'accès au WLAN comprennent des informations concernant le deuxième ensemble d'AP, et les informations concernant le deuxième ensemble d'AP comprennent des informations d'identifiant de l'au moins un AP dans le deuxième ensemble d'AP (étape 302) ;
d.) la détermination, par le contrôleur de station de base, d'un premier ensemble d'AP selon les informations concernant le deuxième ensemble d'AP, dans lequel le premier ensemble d'AP comprend au moins un AP (étape 303) ;
e.) l'envoi, par l'équipement utilisateur, d'une demande de service au réseau fédérateur ou l'envoi, par le contrôleur de station de base, d'une demande d'authentification au réseau fédérateur, afin de déclencher le réseau fédérateur pour réaliser un processus d'authentification d'identité pour l'équipement utilisateur (étape 304) ;
f.) la réception, par le contrôleur de station de base, d'un message de succès d'authentification envoyé par le réseau fédérateur (étape 305) ;
g.) après la réception du message de succès d'authentification par le contrôleur de station de base, l'envoi, par le contrôleur de station de base, d'informations concernant le premier ensemble d'AP à l'équipement utilisateur, dans lequel les informations concernant le premier ensemble d'AP comprennent des informations d'identifiant de l'au moins un AP dans le premier ensemble d'AP (étape 306) ;
h.) la détermination, par l'équipement utilisateur, à partir du premier ensemble d'AP, de l'AP à accès pour accéder au WLAN selon les informations reçues concernant le premier ensemble d'AP (étape 307) ;
i.) lorsque l'équipement utilisateur accède à l'AP à accès, l'envoi, par l'équipement utilisateur, d'un message de succès d'accès au contrôleur de station de base ou, lorsque l'AP à accès détecte que l'équipement utilisateur accède à celui-ci, l'envoi, par l'AP à accès, du message de succès d'accès au contrôleur de station de base, dans lequel le message de succès d'accès est utilisé pour notifier, au contrôleur de station de base, que l'équipement utilisateur accède avec succès au WLAN en utilisant l'AP à accès (étape 308).

2. Procédé selon la revendication 1, dans lequel des informations concernant le premier ensemble d'AP comprennent en outre un ou plusieurs de ce qui suit : une clef utilisée pour l'accès, une bande de fréquence de l'au moins un AP dans le premier ensemble d'AP, une période d'un canal à balise de l'au moins un AP dans le premier ensemble d'AP, une qualité de signal de transmission de l'au moins un AP dans le premier ensemble d'AP, et une intensité de signal de transmission de l'au moins un AP dans le premier ensemble d'AP.

3. Procédé selon la revendication 1 ou 2, dans lequel le message de succès d'accès comprend des informations d'identifiant de l'AP à accès.

4. Procédé selon l'une quelconque des revendications 1 à 3, comprenant en outre : lorsque le message de succès d'accès envoyé par l'équipement utilisateur ou l'AP à accès est reçu, l'envoi, par le contrôleur de station de base, d'un indicateur de type de canal au réseau fédérateur, pour que le réseau fédérateur réalise une charge selon l'indicateur de type de canal.

5. Procédé selon l'une quelconque des revendications 1 à 4, à l'instant de la réception (101) d'informations d'accès au WLAN pour demander un accès au réseau local sans fil WLAN envoyées par l'équipement utilisateur, comprenant en outre :
la réception, par le contrôleur de station de base, d'une adresse de contrôle d'accès au support, MAC, de l'équipement utilisateur envoyée par l'équipement utilisateur.

6. Procédé selon l'une quelconque des revendications 1 à 5,
dans lequel le contrôleur de station de base est un NodeB évolué, eNodeB.

7. Système comprenant un contrôleur de station de base d'une station de base servant un équipement utilisateur, l'équipement utilisateur, un point d'accès à accès, AP à accès, et un réseau fédérateur, dans lequel le système est configuré et prévu pour réaliser l'un quelconque des procédés selon les revendications 1 à 6.
